(19) Europäisches Patentamt
European Patent Office
Office européen des brevets

(11) **EP 3 068 024 B1**

(12) **EUROPÄISCHE PATENTSCHRIFT**

(45) Veröffentlichungstag und Bekanntmachung des Hinweises auf die Patenterteilung:
**31.01.2018  Patentblatt 2018/05**

(51) Int Cl.:
*H02M 1/42* *(2007.01)*        *H02M 7/219* *(2006.01)*

(21) Anmeldenummer: **15158195.6**

(22) Anmeldetag: **09.03.2015**

(54) **Verfahren zur Ansteuerung eines Vienna-Gleichrichters**

METHOD FOR CONTROLLING A VIENNA RECTIFIER

PROCÉDÉ DESTINÉ À LA COMMANDE D'UN REDRESSEUR VIENNA

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**14.09.2016  Patentblatt 2016/37**

(73) Patentinhaber: **Siemens Aktiengesellschaft 80333 München (DE)**

(72) Erfinder:
• **Nieberlein, Klaus 90471 Nürnberg (DE)**

• **Schierling, Hubert 91052 Erlangen (DE)**

(56) Entgegenhaltungen:
**EP-A2- 2 131 480**

• **WENXI YAO ET AL: "A novel SVPWM scheme for Vienna rectifier without current distortion at current zero-crossing point", 2014 IEEE 23RD INTERNATIONAL SYMPOSIUM ON INDUSTRIAL ELECTRONICS (ISIE), IEEE, 1. Juni 2014 (2014-06-01), Seiten 2349-2353, XP032624063, DOI: 10.1109/ISIE.2014.6864986 [gefunden am 2014-07-24]**

**Beschreibung**

Die Erfindung betrifft ein Verfahren zur Ansteuerung eines auch als Dreiphasen-Dreipunkt-Pulsgleichrichters bezeichneten sogenannten Vienna-Gleichrichters. Eine Beschreibung des Vienna-Gleichrichters findet sich z.B. in der EP 0 660 498 A2.

Ein Vienna-Gleichrichter zeichnet sich bekanntlich im Gegensatz zu herkömmlichen, zur Gleichrichtung von Drehstrom verwendeten Sechspuls-Brückenschaltungen (B6) durch einen wesentlich geringeren Oberschwingungsanteil auf der Wechselspannungsseite aus. Aufgrund eines näherungsweise sinusförmigen Stromverlaufes ist vor allem bei größeren Leistungen ein kleinerer Netzfilter ausreichend und somit ein geringeres Volumen für den Vienna-Gleichrichter nötig. Dem gegenüber steht eine vergleichsweise aufwändige elektronische Ansteuerschaltung, welche den Vienna-Gleichrichter mittels Pulsweitenmodulation (PWM) ansteuert

Für die Ansteuerung eines Vienna-Gleichrichters oder allgemein eines aktiven Gleichrichters - im Folgenden kurz als Gleichrichter bezeichnet - wird ein Pulsmuster zur Ansteuerung der Leistungshalbleiter benötigt. Eine vorgeschaltete Regelung gibt einen Spannungszeiger mit einem Winkel und einer Amplitude aus. Genau wie bei der Raumzeigermodulation können Sektoren definiert werden, in denen sich der Spannungszeiger bewegen kann. Die Schaltzustände an den Ecken der jeweiligen Sektoren sind bekannt, aber für den Spannungszeiger müssen nun auch noch die Schaltzeiten bestimmt werden. Des Weiteren muss zum aktuellen Spannungszeiger noch ein zugehöriger Subsektor bestimmt werden, da es gegenüber der Raumzeigermodulation beim Zweipunkt- Wechselrichter nicht nur sechs, sondern insgesamt 24 Sektoren gibt.

Beschreibungen eines Verfahrens zur Ansteuerung eines Vienna-Gleichrichters nach dem Stand der Technik finden sich in die Offenbarung, "A novel SVPWM scheme for Vienna rectifier without current distortion at current zerocrossing point", Wenxi Yao et al, und in der EP2131480. Eine Aufgabe der vorliegenden Erfindung besteht darin, eine besonders effiziente Möglichkeit zur Ansteuerung des Vienna-Gleichrichters, also einen besonders effizienten Steuersatz, anzugeben. Die angestrebte Effizienz bezieht sich dabei darauf, dass eine Implementierung des Verfahrens in Software, Firmware oder Soft- und Firmware möglichst ressourcenschonend ist und in jeder Taktperiode eine vergleichsweise geringe Ausführungsdauer des in einem festen Zeitraster kontinuierlich ablaufenden Verfahrens resultiert.

Dies wird mittels eines Verfahrens zur Ansteuerung eines Vienna-Gleichrichters mit den Merkmalen des Anspruchs 1 gelöst. Dazu sind bei einem Verfahren zur Ansteuerung eines drei steuerbare Schalter, insbesondere steuerbare Schalter in Form von Leistungshalbleitern, umfassenden Vienna-Gleichrichters die folgenden Schritte vorgesehen: Anhand eines im Folgenden mitunter auch nur als Vektor bezeichneten charakteristischen Vektors, z.B. eines von einer Regelungseinrichtung zur Ansteuerung des Vienna-Gleichrichters ausgegebenen Spannungsvektors, wird in einer Schaltrose für den Vienna-Gleichrichter aus einer Mehrzahl von Blöcken, hier sechs Blöcken, ein Block ausgewählt. Entsprechend dem ausgewählten Block und dessen Position in der Schaltrose wird der Vektor um einen der Position des Blocks in der Schaltrose entsprechenden Offsetwinkel gedreht. Der resultierende Winkel des gedrehten Vektors wird als normierter Phasenwinkel $\Theta$ weiter verwendet und der Block, in den der gedrehte Vektor fällt, wird zur Unterscheidung als erster Block bezeichnet. In einem weiteren Verfahrensschritt wird anhand des normierten Phasenwinkels $\Theta$ eine obere oder untere Hälfte des ersten Blocks ausgewählt. In einem nochmals weiteren Verfahrensschritt wird anhand des Betrags des normierten Phasenwinkels $\Theta$ und des gedrehten Vektors in dem ersten Block einer von drei Flächenabschnitten des ersten Blocks ausgewählt. In einem nochmals weiteren Verfahrensschritt erfolgt anhand des ermittelten Flächenabschnitts eine Ermittlung von in Summe dem gedrehten Vektor entsprechenden Subvektoren k0, k1, k2. Schließlich erfolgt in einem nochmals weiteren Verfahrensschritt anhand der ermittelten Subvektoren k0, k1, k2 eine Ermittlung von Schaltzeiten t0, t1, t2 zur Ansteuerung der steuerbaren Schalter des Vienna-Gleichrichters.

Das hier und im Folgenden beschriebene Verfahren bildet die Basis für einen Algorithmus zur Ansteuerung des Vienna-Gleichrichters, nämlich zur Ansteuerung der davon umfassten drei steuerbaren Schalter. Gemäß der üblichen Fachterminologie wird ein solcher Algorithmus oder dessen Implementation in Soft- oder Firm- oder Soft- und Firmware auch als Steuersatz bezeichnet. Bei einer Implementierung des Verfahrens kommt es vor allem auf schnelle Ausführungszeiten an. Der Vorteil der Erfindung besteht demgemäß vor allem in einer solche schnellen Ausführungszeiten ermöglichenden Vereinfachung, insbesondere einer Vereinfachung der zur Ansteuerung des Vienna-Gleichrichters notwendigen Berechnungen.

Durch die Verwendung des normierten Phasenwinkels $\Theta$ und des gedrehten Vektors ergibt sich anstelle eines Blocks von zum Beispiel sechs Blöcken, in den der charakteristische Vektor, z.B. der von einer Regelungseinrichtung ausgegebene Spannungsvektor, fallen könnte, genau ein Block, nämlich der zur Unterscheidung als erster Block bezeichnete Block, auf den sich die weiteren Berechnungen beziehen können. Dies ist bereits eine erste wesentliche Vereinfachung.

Indem anhand des normierten Phasenwinkels $\Theta$ eine obere oder untere Hälfte des ersten Blocks (B1) ausgewählt wird, ergibt sich eine weitere Vereinfachung, denn dann kann im Weiteren jeweils vom Betrag des normierten Phasenwinkels $\Theta$ ausgegangen werden, ohne dass eine vom Vorzeichen des normierten Phasenwinkels $\Theta$ abhängige Unterscheidung notwendig wäre.

**EP 3 068 024 B1**

Indem anhand des Betrags des normierten Phasenwinkels Θ und des gedrehten Vektors in dem ersten Block einer von drei Flächenabschnitten des ersten Blocks ausgewählt, wird, kann für jeden der drei Flächenabschnitte eine Fallunterscheidung in Bezug auf eine möglichst einfache, also wenig rechenzeitaufwändige, Ermittlung von in Summe dem gedrehten Vektor entsprechenden Subvektoren k0, k1, k2 erfolgen.

Anhand der ermittelten Subvektoren k0, k1, k2 erfolgt schließlich eine Ermittlung von Schaltzeiten t0, t1, t2 zur Ansteuerung der steuerbaren Schalter.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin. Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bei einer Ausführungsform des Verfahrens ist für jeden Sektor der Schaltrose eine Umlaufrichtung definiert. Zur Auswahl einer Umlaufrichtung für die Ansteuerung der Schalter wird in demjenigen Block, in den der charakteristische Vektor fällt, entsprechend der im ersten Block ausgewählten oberen oder unteren Hälfte dessen obere oder untere Hälfte und entsprechend dem im ersten Block ausgewählten Flächenabschnitt einer von drei Sektoren entsprechend der zugrunde liegenden Schaltrose ausgewählt. Eine solche definierte Verwendung vorgegebener Umlaufrichtungen gewährleistet, dass pro Schaltaktivität jeweils nur genau ein Zustand eines der drei steuerbaren Schalter verändert wird. Auf diese Weise gelingt eine Minimierung von Schaltverlusten.

Bei einer weiteren Ausführungsform des Verfahrens wird die Schaltzeit t0 eines Nullvektors k0 halbiert und eine Ansteuerung eines der steuerbaren Schalter entsprechend der halbierten Schaltzeit t0 erfolgt einerseits am Anfang und andererseits am Ende einer jeden Taktperiode T, so dass sich in vorteilhafter Art und Weise die Situation ergibt, dass jede Taktperiode T mit genau dem Schaltzustand endet, mit dem die Taktperiode begonnen hat.

Bei einer nochmals weiteren Ausführungsform des Verfahrens werden die ermittelten Schaltzeiten t0, t1, t2 halbiert und die halbierten Schaltzeiten t0, t1, t2 werden in einer ersten Reihenfolge auf eine erste Hälfte einer jeden Taktperiode T und in einer im Vergleich zur ersten Reihenfolge umgekehrten zweiten Reihenfolge auf eine zweite Hälfte der jeweiligen Taktperiode T verteilt, so dass in vorteilhafter Art und Weise ein Spannungsunterschied zwischen zwei zusammen einen Zwischenkreis bildenden Zwischenkreiskapazitäten verringert wird.

Bei einer speziellen Ausführungsform des Verfahrens, die in einem modifizierten Algorithmus zur Implementierung des Verfahrens resultiert, wird als charakteristischer Vektor nicht der von einer Regelungseinrichtung ausgegebene Spannungsvektor, sondern ein Stromvektor gemäß einem den Vienna-Gleichrichter speisenden Netz verwendet. Bei der Verwendung der von der Regelungseinrichtung ausgegebenen Spannungsvektoren als charakteristische Vektoren kann sich ergeben, dass ein ausgegebener Spannungsvektor zu einer Schaltstellung führen würde, die mit dem Vienna-Gleichrichter mit seinen nur drei steuerbaren Schaltern nicht realisierbar ist. Die Verwendung des Stromvektors hat den Vorteil, dass solche unzulässigen Schaltstellungen ausgeschlossen sind.

Indem bei einer den Stromvektor als charakteristischen Vektor verwendenden Ausführungsform des Verfahrens die ermittelten Subvektoren k0, k1, k2 in Abhängigkeit von einem äußeren, mittleren oder inneren Blocksektor, in den der gedrehte Vektor fällt, auf die Fläche des jeweiligen Blocksektors begrenzt werden, ergibt sich eine besonders einfache Möglichkeit zur Ermittlung der Subvektoren k0, k1, k2. Der Umstand, dass es sich bei den Blocksektoren um gleichseitige Dreiecke handelt, begünstigt die vereinfachte Ermittlung der Subvektoren k0, k1, k2.

Bei einer Ausführungsform der den Stromvektor als charakteristischen Vektor verwendenden Variante des Verfahrens ergibt sich eine besonders einfache Ermittlung einer der Ansteuerung der Schalter zugrunde liegenden Umlaufrichtung, indem für jeden Sektor der Schaltrose zumindest eine Umlaufrichtung definiert ist und die Sektoren der Schaltrose entsprechend einer vorgegebenen Nummerierungsreihenfolge (doppelspiralige Nummerierungsreihenfolge) nummeriert sind. Einer der Sektoren und die dort definierte Umlaufrichtung werden dabei nach folgendem Schema ausgewählt: Zunächst wird ein für den Block, in den der charakteristische Vektor fällt, vorgegebener Zahlenwert ermittelt. Zu diesem wird in Abhängigkeit vom Vorzeichen des normierten Phasenwinkels Θ ein vorgegebener erster oder zweiter Summand addiert. Zu dieser Summe wird in Abhängigkeit vom jeweiligen Blocksektor ein vorgegebener dritter, vierter oder fünfter Summand addiert. Die Auswahl des die jeweilige Umlaufrichtung bestimmenden Sektors reduziert sich damit auf simple Additionen, zudem auf Additionen positiver ganzer Zahlen.

Bei einer speziellen Ausführungsform des gegenständlichen Verfahrens ist vorteilhaft zur Symmetrierung einer ausgangsseitigen, über zwei in Reihe geschalteten Zwischenkreiskapazitäten abgreifbaren Zwischenkreisspannung des Vienna-Gleichrichters vorgesehen, dass eine Spannung über jeder Zwischenkreiskapazität ermittelt wird, dass die ermittelten Spannungswerte einem Regler zugeführt werden und dass der Regler zur Symmetrierung der Zwischenkreisspannung die Schaltzeiten t0, t1, t2, insbesondere die Schaltzeit t0 eines Nullzeigers k0, beeinflusst. Diese Möglichkeit zur Symmetrierung der Zwischenkreisspannung ist zudem vorteilhaft unabhängig von der Verwendung eines von der Regelungseinrichtung ausgegebenen Spannungsvektors oder des Stromvektors als charakteristischem Vektor.

Die oben genannte Aufgabe wird auch mit einer Reglungseinrichtung, einem Mikrokontroller oder dergleichen gelöst, die bzw. der nach dem Verfahren wie hier und im Folgenden beschrieben arbeitet und dazu Mittel zur Durchführung des Verfahrens umfasst. Die Erfindung ist dabei bevorzugt in Software implementiert. Die Erfindung ist damit einerseits auch ein Computerprogramm mit durch einen Computer ausführbaren Programmcodeanweisungen und andererseits ein Speichermedium mit einem derartigen Computerprogramm, also ein Computerprogrammprodukt mit Programmcodemitteln, sowie schließlich auch eine Steuerungseinrichtung oder ein Antriebssystem, in deren bzw. dessen Speicher als Mittel zur Durchführung des Verfahrens und seiner Ausgestaltungen ein solches Computerprogramm geladen oder ladbar ist.

Ein solches Computerprogramm ist eine Implementierung des gegenständlichen Verfahrens zur Ansteuerung des Vienna-Gleichrichters in Software. Anstelle eines solchen Computerprogramms mit einzelnen Programmcodeanweisungen kann die Implementierung des hier und im Folgenden beschriebenen Verfahrens auch in Form von Firmware erfolgen. Dem Fachmann ist klar, dass anstelle einer Implementation eines Verfahrens in Software stets auch eine Implementation in Firmware oder in Firm- und Software oder in Firm- und Hardware möglich ist. Daher soll für die hier vorgelegte Beschreibung gelten, dass von dem Begriff Software oder den Begriffen Computerprogramm und Algorithmus auch andere Implementationsmöglichkeiten, nämlich insbesondere eine Implementation in Firmware oder in Firm- und Software oder in Firm- und Hardware, umfasst sind.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das Ausführungsbeispiel ist nicht als Einschränkung der Erfindung zu verstehen. Vielmehr sind im Rahmen der vorliegenden Offenbarung durchaus auch Ergänzungen und Modifikationen möglich, insbesondere solche, die z.B. durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen

FIG 1 einen Vienna-Gleichrichter als spezielle Ausführungsform eines Dreipunkt-Wechselrichters mit einer zu dessen Ansteuerung vorgesehenen Regelungseinrichtung,
FIG 2 eine sogenannte Schaltrose eines Zweipunkt-Wechselrichters,
FIG 3 eine Schaltrose eines Dreipunkt-Wechselrichters,
FIG 4 Schaltzustände eines Zweipunkt-Wechselrichters,
FIG 5 Schaltzustände eines Dreipunkt-Wechselrichters,
FIG 6 eine Aufteilung der Schaltrose des Dreipunkt-Wechselrichters in symmetrische Blöcke,
FIG 7 eine Aufteilung eines der Blöcke gemäß FIG 6 in eine positive und eine negative Hälfte,
FIG 8 eine Aufteilung eines der Blöcke gemäß FIG 6 in zweimal drei einander jeweils achsensymmetrisch gegenüberliegende Flächenabschnitte,
FIG 9 sogenannte Subvektoren in den einzelnen Flächenabschnitten gemäß FIG 8,
FIG 10 und
FIG 11 Illustrationen zur Verdeutlichung einer Ermittlung desjenigen Flächenabschnitts gemäß FIG 8, in den ein von der Regelungseinrichtung ausgegebener Spannungsvektor fällt,
FIG 12 und
FIG 13 Illustrationen zur Veranschaulichung einer Ermittlung der jeweiligen Längen der Subvektoren gemäß FIG 9 zur Bildung des von der Regelungseinrichtung ausgegebenen Spannungsvektors,
FIG 14 eine Flussdiagramm-Darstellung des Grundprinzips des hier vorgeschlagenen Verfahrens zur Ansteuerung eines Vienna-Gleichrichters,
FIG 15 eine Darstellung einzelner bei einer Anwendung des gegenständlichen Verfahrens resultierender Schaltzustände über zwei Taktperioden,
FIG 16 die Schaltrose des Vienna-Gleichrichters gemäß FIG 3, FIG 5 mit für jeden Sektor vorgegebenen Umlaufrichtungen,
FIG 17 eine Auswahl eines Blocks wie in FIG 6 auf der Basis der Phasenströme gemäß einer Ausführungsform des gegenständlichen Verfahrens,
FIG 18 eine Aufteilung eines Blocks gemäß FIG 17 in einzelne Blocksektoren,
FIG 19 ein sogenanntes 60°-Dreieck (gleichseitiges Dreieck) zur Veranschaulichung dort geltender Verhältnisse,
FIG 20 bis

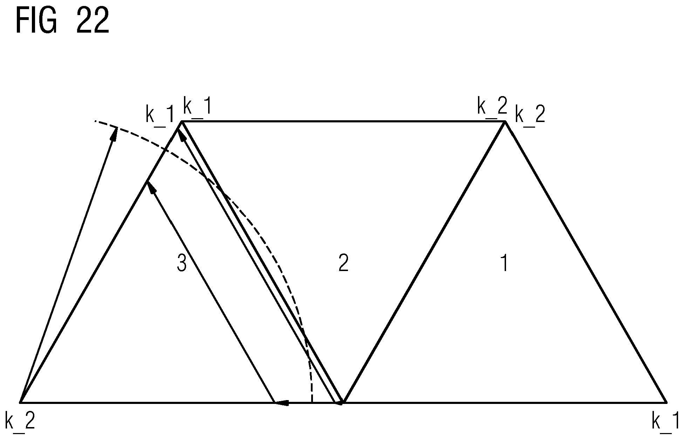

FIG 22 eine Begrenzung der Subvektoren auf jeweils einen der Blocksektoren gemäß FIG 18 gemäß einer Ausführungsform des gegenständlichen Verfahrens,
FIG 23 eine für eine Ausführungsform des gegenständlichen Verfahrens vorgegebene Nummerierung der Sektoren der Schaltrose zur Festlegung der Umlaufrichtung.

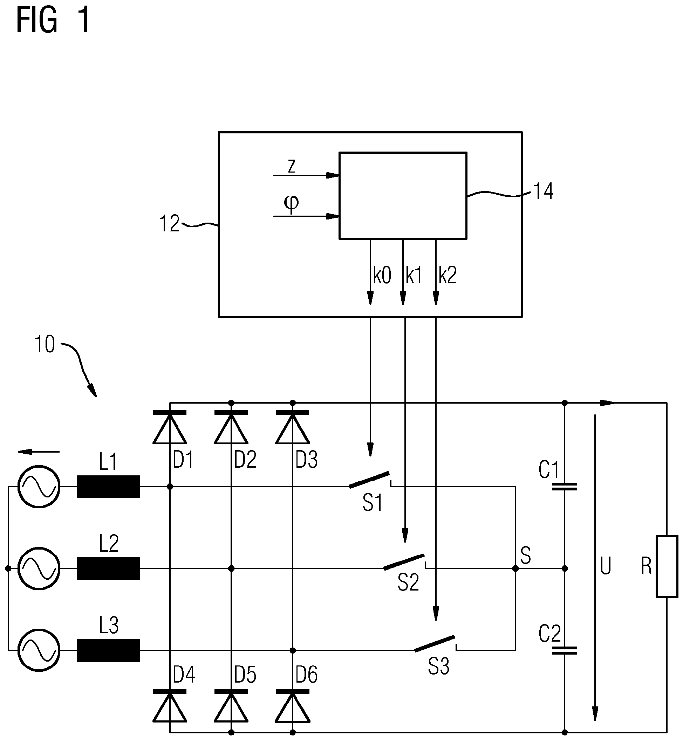

Die Darstellung in FIG 1 zeigt einen Vienna-Gleichrichter 10. Dessen Speisung erfolgt aus einem Drehstromnetz mit den dortigen drei Phasen L1, L2, L3 und den zugehörigen Phasenströmen $I_{L1}$, $I_{L2}$, $I_{L3}$ sowie der jeweiligen Netzfrequenz f, z.B. 50 Hz. Im oberen und im unteren Brückenzweig befinden sich jeweils drei Dioden D1, D2, D3; D4, D5, D6. Drei steuerbare Schalter S1, S2, S3 - üblicherweise elektronische Schalter S1-S3 in Form von Leistungshalbleitern - verbinden die Phasen L1, L2, L3 schaltbar mit einem Sternpunkt S und werden entsprechend mitunter auch als Sternpunktschalter S1-S3 bezeichnet. Ausgangsseitig weist der im Folgenden kurz als Gleichrichter 10 bezeichnete Vienna-Gleichrichter 10 in einem Zwischenkreis zwei in Reihe geschaltete Zwischenkreiskapazitäten C1, C2 auf, wobei ein Mittelabgriff zwischen den beiden Zwischenkreiskapazitäten C1, C2 mit dem Sternpunkt S verbunden ist. Über dem Zwischenkreis (über den Zwischenkreiskapazitäten C1, C2) ist eine für die Versorgung einer jeweils angeschlossenen Last R verfügbare Spannung U abgreifbar.

Für den Erhalt einer jeweils gewünschten Ausgangsspannung U sind nur die Schaltstellungen der Sternpunktschalter S1-S3 beeinflussbar. Zur Ansteuerung der Sternpunktschalter S1-S3 ist eine Regelungseinrichtung 12 mit einem dort oder unabhängig von der Regelungseinrichtung 12 in Software, Firmware oder Soft- und Firmware implementierten Steuersatzalgorithmus 14 vorgesehen. Die Regelungseinrichtung 12 mit dem Steuersatzalgorithmus 14 oder die Regelungseinrichtung 12 und der Steuersatzalgorithmus 14 sind z.B. in Form eines Mikrokontrollers oder jeweils eines Mikrokontrollers ausgeführt.

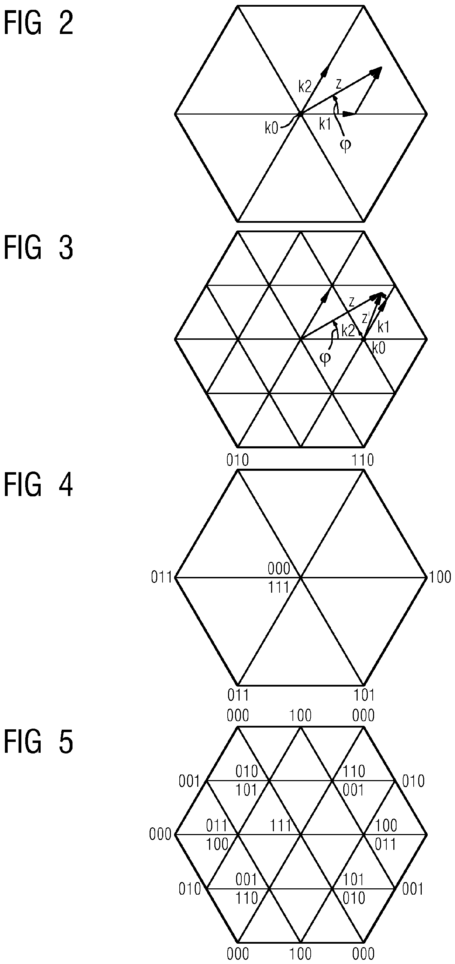

Für eine jeweils gewünschte Ausgangsspannung U gibt die Regelungseinrichtung 12 einen Spannungsvektor (Spannungszeiger) z mit einem Betrag Z und einem Phasenwinkel φ aus (siehe z.B. FIG 3). Aufgrund des Spannungsvektors z ermittelt der Steuersatzalgorithmus 14 die zur Ansteuerung der Sternpunktschalter S1-S3 bestimmten Schaltzeiten t0, t1, t2. Entsprechend dieser Schaltzeiten t0, t1, t2 steuert die Regelungseinrichtung 12 die Sternpunktschalter S1-S3 an.

Die Darstellungen in FIG 2, FIG 3, FIG 4 und FIG 5 zeigen zum Vergleich sogenannte Schaltrosen eines Zweipunkt-Wechselrichters (FIG 2, FIG 4) und eines Dreipunkt-Wechselrichters (FIG 3, FIG 5). Bei dem Vienna-Gleichrichter 10 handelt es sich um einen Dreipunkt-Wechselrichter mit einer begrenzten Anzahl steuerbarer Schalter, nämlich der Sternpunktschalter S1-S3. Die Schaltrose des Zweipunkt-Wechselrichters umfasst erkennbar sechs Sektoren. Die Schaltrose des Vienna-Gleichrichters 10 umfasst die 26 Sektoren eines Dreipunkt-Wechselrichters. Der Zweipunkt-Wechselrichter hat nur einen Nullpunkt (im Zentrum der Schaltrose) mit zwei Nullzeigern ("000", "111") und insgesamt acht Zustände (FIG 4). Der Dreipunkt-Wechselrichter hat sechs Nullpunkte mit jeweils zwei Nullzeigern und kann insgesamt 48 Zustände annehmen (FIG 5). Wegen der nur drei steuerbaren Schalter S1-S3 ist beim Vienna-Gleichrichter 10 die Anzahl der tatsächlich einstellbaren Zustände geringer. Es lassen sich nämlich genau acht Zustände einstellen. Die Angabe der Schaltzustände des Vienna-Gleichrichters 10 in der Darstellung in FIG 5 bezieht sich in der üblichen Notation auf die drei Phasen L1, L2, L3, so dass "000" z.B. bedeutet, dass alle Sternpunktschalter S1-S3 geschlossen sind, während eine "1" im Schaltzustand eine durchgeschaltete Diode D1-D3 im oberen Brückenzweig und eine "1" eine durchgeschaltete Diode D4-D6 im unteren Brückenzweig bedeuten würde.

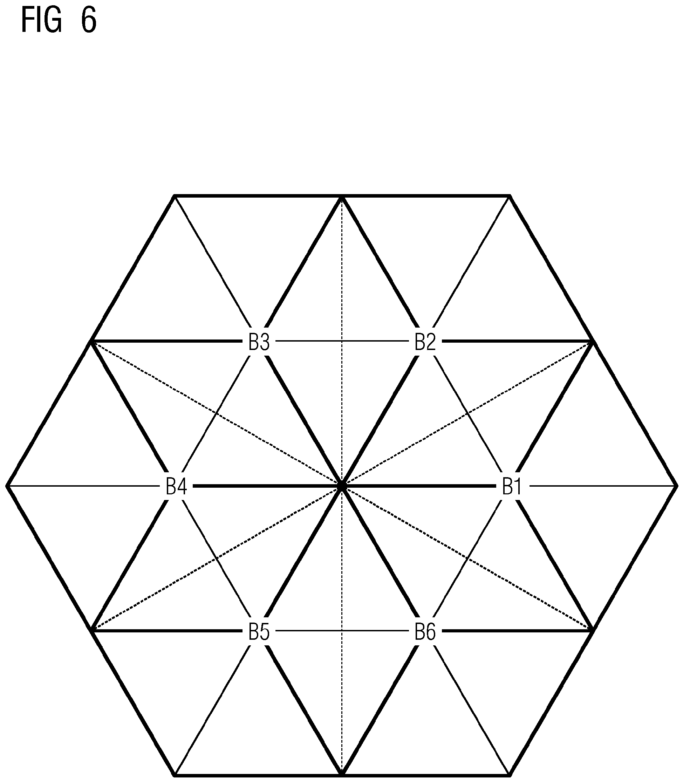

Die Darstellung in FIG 6 zeigt, dass sich die Schaltrose des Dreipunkt-Wechselrichters in sechs einander jeweils teilweise überlappende Blöcke B1-B6, also einen ersten Block B1, einen zweiten Block B2, usw., aufteilen lässt. Jeweils ein Nullpunkt/Nullzeiger bildet den Mittelpunkt eines Blocks B1-B6. Alle Blöcke B1-B6 sind grundsätzlich gleich und durch eine Drehung um einen entsprechenden Winkel kann jeder Block B1-B6 auf jeden anderen Block B1-B6 gedreht werden. Damit kann jeder von der Regelungseinrichtung 12 ausgegebene Spannungsvektor z mit gleichen Formeln berechnet werden.

Im Folgenden werden die mittels des Steuersatzalgorithmus 14 kontinuierlich und automatisch ausgeführten Berechnungen anhand des ersten Blocks B1 gezeigt. Wenn der von der Regelungseinrichtung 12 ausgegebene Spannungsvektor (Zeiger) z in einen der anderen Blöcke B2-B6 fällt, erfolgt eine Drehung des Zeigers z um einen jeweiligen Winkel, z.B. -60°, -120° usw., so dass dieser schließlich in diesen ersten Block B1 fällt.

Dazu wird von dem von der Regelungseinrichtung 12 jeweils vorgegebenen Phasenwinkel φ des Spannungsvektors z (siehe z.B. FIG 3) ein für die jeweilige Drehung erforderlicher Winkel (Offsetwinkel) abgezogen:

1. Block B1 : 330° < φ < 30° Θ = φ bei φ > 330°, sonst
Θ = φ - 360°
2. Block B2: 30 ° < φ < 90° Θ = φ - 60°
3. Block B3: 90 ° < φ < 150° Θ = φ - 120°
4. Block B4: 150° < φ < 210° Θ = φ - 180°
5. Block B5: 210° < φ < 270° Θ = φ - 240°
6. Block B6: 270 ° < φ < 330 ° Θ = φ - 300°

Da sich jeder Block B1-B6 mit seinen jeweils benachbarten Blöcken B1-B6 überschneidet, z.B. der erste Block B1 mit dem nachfolgenden zweiten Block B2 und dem vorangehenden sechsten Block B6, wird das Mittel der Überschneidung als Abgrenzung angenommen. Somit bewegt sich der im Folgenden auch als normierter Phasenwinkel

bezeichnete Winkel $\Theta$ stets in einem Bereich von -30° < $\Theta$ < 30°.

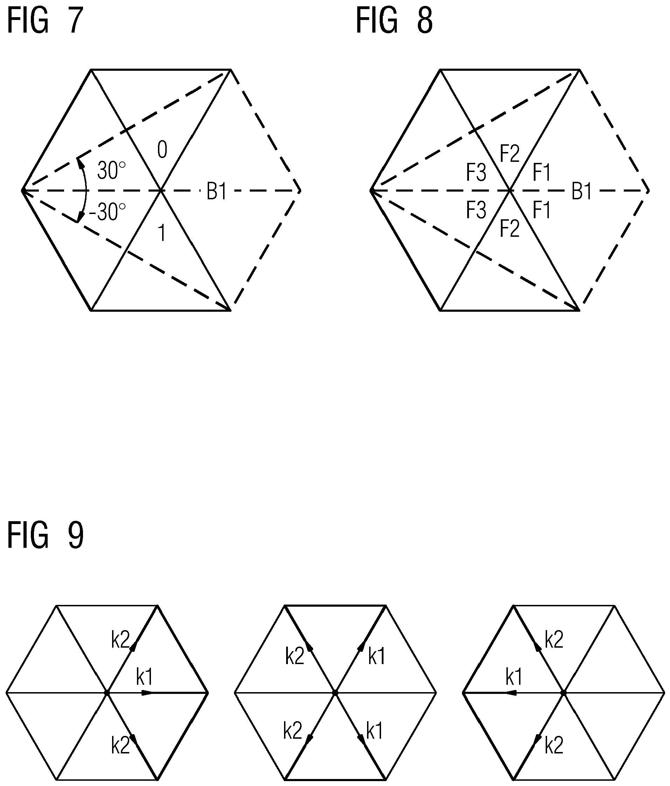

Die Darstellung in FIG 7 zeigt am Beispiel des ersten Blocks B1, dass jeder Block B1-B6 eine negative Hälfte "1" und eine positive Hälfte "0" umfasst. Die Darstellung in FIG 8 zeigt - wiederum am Beispiel des ersten Blocks B1 - dass jeder Block B1-B6 sechs Flächenabschnitte in Form von zweimal drei einander jeweils paarig und achsensymmetrisch gegenüberliegenden Flächenabschnitten F1, F2, F3 umfasst. Die Darstellung in FIG 9 zeigt eine Bezeichnung der sogenannten Subvektoren k1, k2 für die einzelnen Sektoren eines Blocks B1-B6, hier am Beispiel des ersten Blocks B1. Die fett gezeichneten Randlinien innerhalb des Blocks B1 bezeichnen zusammen mit den über die Randlinie gezeichneten Subvektoren k1, k2 denjenigen Bereich des Blocks B1 / des Sektors, der durch eine Variation der Subvektoren k1, k2 erreicht werden kann.

Aufgrund der Achsensymmetrie (FIG 7) können die Blöcke B1-B6 oder der nach der Drehung um den Offsetwinkel z.B. betrachtete erste Block B1 in zwei symmetrische Hälften geteilt werden, nämlich eine erste Hälfte von 30° > $\Theta$ > 0° und eine zweite Hälfte von -30° < $\Theta$ < 0°. Die einander achsensymmetrisch gegenüberliegenden Flächenabschnitte F1, F2, F3 (FIG 8) gehören jeweils entweder zur ersten Hälfte oder zur zweiten Hälfte des Blocks B1. Dadurch sind zur Implementation des Steuersatzalgorithmus 14 Formeln ausreichend, die sich auf die drei Flächenabschnitte F1, F2, F3 einer Hälfte des Blocks B1, z.B. der ersten Hälfte mit 30° > $\Theta$ > 0°, beziehen. Für die zweite Hälfte wird anstelle des Winkels $\Theta$ dessen Absolutwert $|\Theta|$ verwendet.

Der nächste mittels des Steuersatzalgorithmus 14 ausgeführte Verfahrensschritt ist die Bestimmung des jeweiligen Flächenabschnitts F1, F2, F3, in den der von der Regelungseinrichtung 12 jeweils ausgegebene Spannungsvektor z fällt.

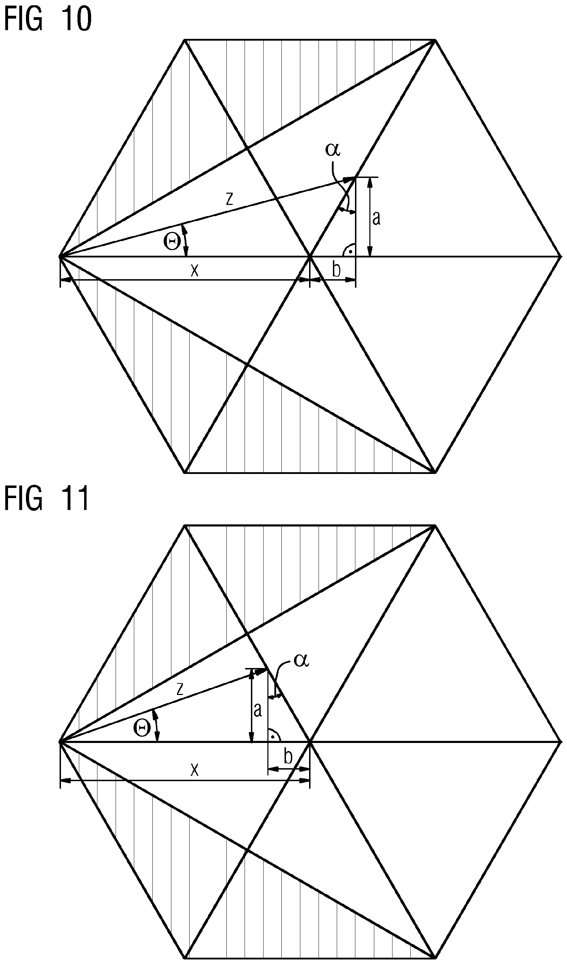

Die Darstellung in FIG 10 zeigt einen in den ersten Flächenabschnitt F1 (vgl. FIG 8) fallenden Spannungsvektor z. Die Darstellung in FIG 11 zeigt einen in den dritten Flächenabschnitt F3 fallenden Spannungsvektor z. Ein Spannungsvektor z, der weder in den ersten Flächenabschnitt F1 noch in den dritten Flächenabschnitt F3 fällt, muss zwangsläufig in den noch verbleibenden zweiten Flächenabschnitt F2 fallen.

Aus dem Spannungsvektor z und dem normierten Phasenwinkel $\Theta$ lässt sich, wie in den Darstellungen in FIG 10 und FIG 11 gezeigt ist, anhand der in einem rechtwinkligen Dreieck geltenden Beziehungen ermitteln, ob der Spannungszeiger z in den ersten oder in den dritten Flächenabschnitt F1, F3 fällt.

Bei einem im ersten Flächenabschnitt F1 liegenden Spannungsvektor z gilt

$$|z| \geq x \cdot \cos(30°) \ / \ \sin(60°-|\Theta|),$$

wobei $|z|$ den Betrag des Vektors, also dessen Länge, bezeichnet.

Bei einem im dritten Flächenabschnitt F3 liegenden Spannungsvektor z gilt

$$|z| \leq x \cdot \cos(30°) \ / \ \sin(60°+|\Theta|).$$

Wenn keine der beiden Ungleichungen erfüllt ist, liegt der Spannungsvektor z im zweiten Flächenabschnitt F2.

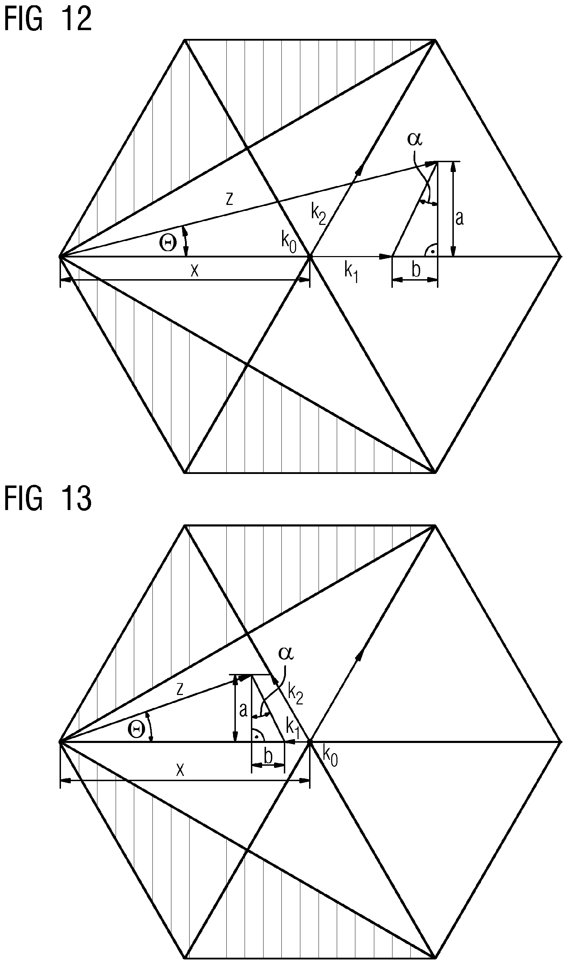

In Abhängigkeit von dem jeweiligen Flächenabschnitt F1, F2, F3, in dem der von der Regelungseinrichtung 12 ausgegebene Spannungsvektor z liegt, lassen sich die Subvektoren k1, k2 (FIG 9) ermitteln. Dafür werden ebenfalls - wie bei der Ermittlung des jeweiligen Flächenabschnitts F1, F2, F3 (FIG 10, FIG 11) - wieder die Verhältnisse in rechtwinkligen Dreiecken ausgenutzt, wie dies in den Darstellungen in FIG 12 und FIG 13 für den ersten bzw. den dritten Flächenabschnitt F1, F3 gezeigt ist.

Demnach ergeben sich bei einem von der Regelungseinrichtung 12 ausgegebenen und im ersten Flächenabschnitt F1 liegenden Spannungsvektor z die Subvektoren k1, k2 zum Erhalt dieses Spannungsvektors z mit den folgenden Längen:

$$|k1| = (z/\cos(30°) \cdot \sin(60°-|\Theta|) - 1$$

$$|k2| = z \cdot \sin(|\Theta|) \ / \ \cos(30°)$$

und bei einem von der Regelungseinrichtung 12 ausgegebenen und im dritten Flächenabschnitt F3 liegenden Spannungsvektor z

$$|k1| = z \sin(|\Theta|) / \cos(30°)$$

$$|k2| = 1 - z \cdot \sin(60° + |\Theta|) / \cos(30°)$$

Die Länge des hier auch mit k0 bezeichnete Nullzeigers berechnet sich jeweils als k0 = 1 - k1 - k2.

Für den nicht dargestellten zweiten Flächenabschnitt F2 gilt

$$k1 = 1 - z \cdot \sin(60°-|\Theta|) / \cos(30°)$$

$$k2 = z \cdot \sin(60°+|\Theta|) / \cos(30°)$$

sowie ebenfalls

$$k0 = 1 - k1 - k2.$$

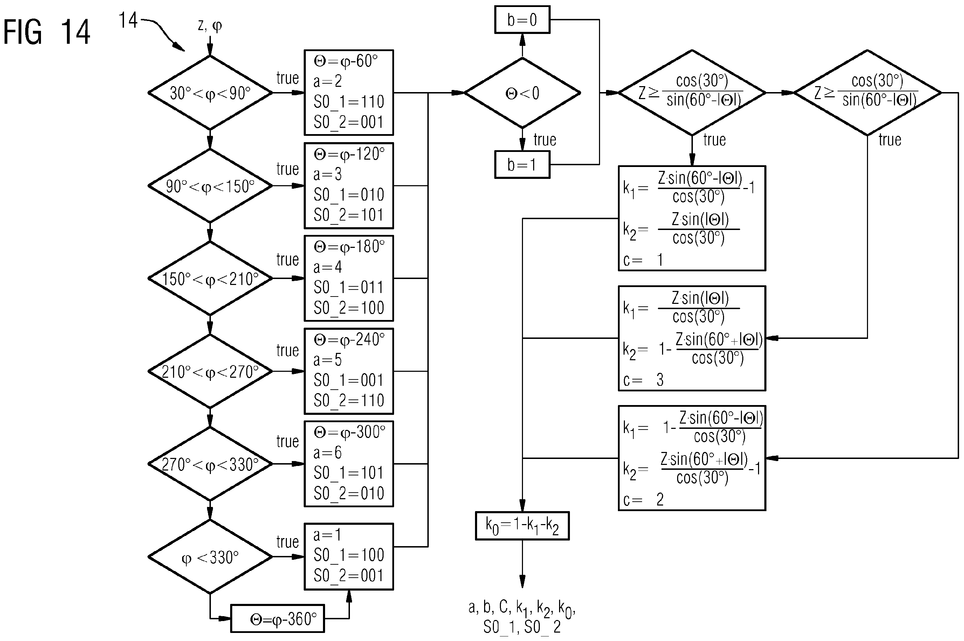

Die bisher erläuterten Berechnungen können in einem schematisch vereinfacht in FIG 14 gezeigten Steuersatzalgorithmus 14 - im Folgenden mitunter auch nur kurz als Algorithmus 14 oder als Steuersatz bezeichnet - zusammengefasst und in Soft-, Firm- oder Soft- und Firmware in der Regelungseinrichtung 12 implementiert werden.

Von links nach rechts umfasst der Algorithmus 14 folgende Funktionen: Zunächst werden der Block B1-B6, in den der Spannungsvektor z fällt, und der Winkel Θ ermittelt (siehe FIG 6 und zugehörige Beschreibung). Der Winkel Θ bezieht sich - entsprechend der obigen Beschreibung - nur noch auf den ersten Block B1. Der jeweils ermittelte Block B1-B6 wird in der Variablen a mitgeführt. Darüber werden die beiden zu dem jeweils ermittelten Block B1-B6 gehörigen Nullzeiger in den mit S0_1 und S0_2 bezeichneten Variablen mitgeführt.

Sodann wird anhand des resultierenden Werts des Winkels Θ ermittelt, ob der von der Regelungseinrichtung 12 ausgegebene und in den ersten Block B1 gedrehte Spannungsvektor z in dessen negative oder positive Hälfte fällt (siehe FIG 7 und zugehörige Beschreibung). Die jeweils ermittelte Hälfte wird in der Variablen b mitgeführt.

Weiter wird (rechts oben in der Darstellung des Algorithmus 14) ermittelt, in welchen der Flächenabschnitte F1, F2, F3 des ersten Blocks B1 der von der Regelungseinrichtung 12 ausgegebene und gedrehte Spannungsvektor z fällt. In Abhängigkeit von der Auswertung der anhand der Darstellungen in FIG 10 und FIG 11 erläuterten Ungleichungen ergeben sich unterschiedliche Verzweigungen innerhalb des Algorithmus 14, wobei die für den jeweiligen Flächenabschnitt F1, F2, F3 zutreffenden und anhand der Darstellungen in FIG 12 und FIG 13 erläuterten Gleichungen zur Bestimmung der Schaltzeiten t1, t2 der Sternpunktschalter S1, S2, S3 angewandt werden. Der jeweils ermittelte Flächenabschnitt F1, F2, F3 wird in Form der Variablen c mitgeführt. Die Schaltzeit t0 ergibt sich unabhängig von dem jeweiligen Flächenabschnitt F1, F2, F3 aus den anderen Schaltzeiten t1, t2.

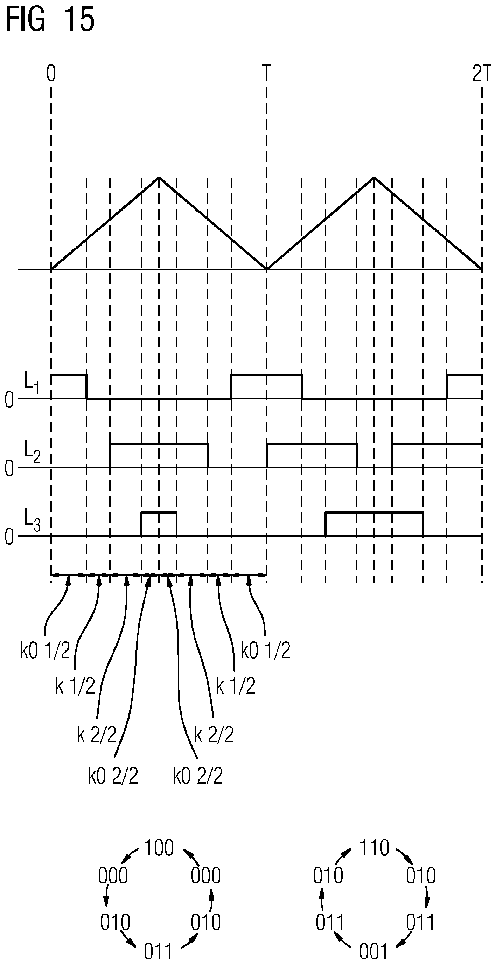

Zur Ansteuerung der Schalter S1-S3 wird die Schaltzeit t0 auf die beiden Schaltzustände des Nullzeigers (siehe oben: "Der Dreipunkt-Wechselrichter hat sechs Nullpunkte mit jeweils zwei Nullzeigern.") aufgeteilt: t01, t02. Um den Spannungsunterschied zwischen den beiden Zwischenkreiskapazitäten C1, C2 zu verringern, werden die Schaltzeiten t01, t02, t1, t2 halbiert und innerhalb einer Taktperiode T achsensymmetrisch gespiegelt ausgegeben, wie dies exemplarisch in FIG 15 gezeigt ist.

Bei der hier beschriebenen Ausführungsform erfolgt die Ansteuerung der Schalter S1-S3 mittels einer nach dem sogenannten Up-Down-Count-Prinzip arbeitenden PWM-Stufe. Diese bildet z.B. den Ausgang einer auch den Algorithmus 14 umfassenden Regelungseinrichtung 12. Bei einem in Form eines separaten Mikrokontrollers oder dergleichen implementierten Algorithmus 14 ist die PWM-Stufe zwischen den Mikrokontroller und die Schalter S1-S3 geschaltet, z.B. indem die PWM-Stufe als Ausgang des Mikrokontrollers fungiert.

Die Darstellung in FIG 15 zeigt im unteren Bereich die drei Phasen L1, L2, L3 und die aufgrund der Schaltzeiten t0, t1, t2 resultierenden Schaltzustände. Im oberen Bereich ist in Form eines symmetrischen Dreiecks das Up-Down-Count-Prinzip gezeigt. Der zugrunde liegende Zähler beginnt in jeder Taktperiode T mit dem Wert "0", wird in der ersten Hälfte der Taktperiode T inkrementiert, erreicht in der Mitte der Taktperiode T sein Maximum und wird in der zweiten Hälfte der Taktperiode T dekrementiert, so dass der Zähler am Ende der Taktperiode T wieder den Wert "0" erreicht. Der jeweilige Zählerstand wird mit den ermittelten Schaltzeiten t0, t1, t2 verglichen, so dass in Abhängigkeit vom Ergebnis des Vergleichs eine Aktivierung oder Deaktivierung der einzelnen Schalter S1-S3 erfolgen kann. Kurz gefasst kann man sagen, dass die Subzeiger k0, k1, k2 zur Ansteuerung der Schalter S1-S3 halbiert und gespiegelt ausgegeben werden:

```
k01/2->k1/2->k2/2->k02/2-> k02/2->k2/2->k1/2->k01/2
```

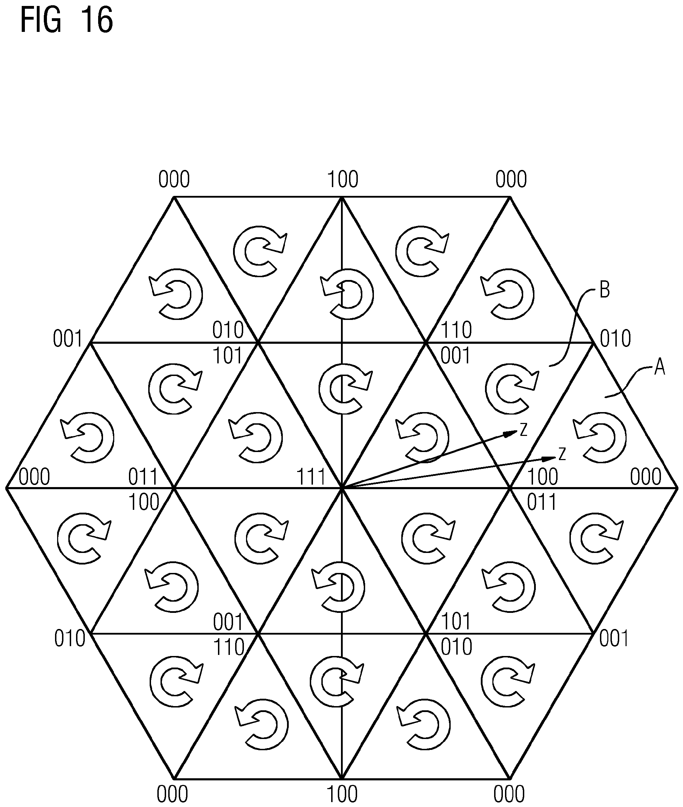

Unterhalb der bisher besprochenen ersten der beiden gezeigten Taktperioden T sind die aufeinander folgenden Schaltzustände gezeigt. Der Schaltzyklus beginnt mit dem Schaltzustand "100" und endet mit diesem Schaltzustand. Allgemein endet jeder Schaltzyklus mit genau dem Nullzeiger/Schaltzustand, mit dem der Schaltzyklus begonnen wurde. Damit pro Schaltaktivität nur ein Schaltzustand verändert wird, also jeweils genau einer der drei Sternpunktschalter S1-S3 geschaltet wird, werden die Subzeiger k0, k1, k2 je nach dem jeweiligen Sektor der Schaltrose, in den der von der Regelungseinrichtung 12 ausgegebene Spannungsvektor z fällt, in einer dem Algorithmus 14 jeweils vorgegebenen Reihenfolge ausgegeben. Die jeweiligen Reihenfolgen (Umlaufrichtungen) sind in der Darstellung in FIG 16 veranschaulicht und die Auswahl eines Sektors und damit die Auswahl der jeweiligen Umlaufrichtung erfolgt anhand der Variablen a, b, c des Algorithmus 14, die jeweils den ursprünglichen Block B1-B6, dessen positive oder negative Hälfte und jeweils eine der drei Teilflächen F1-F3 spezifizieren.

In FIG 16 sind dafür zum Zwecke der Veranschaulichung mit zwei Spannungsvektoren z zwei Sektoren A, B der Schaltrose mit unterschiedlichen Schaltreihenfolgen ausgewählt. Die Darstellung im linken Teil von FIG 15 (erste Taktperiode T) entspricht der Schaltreihenfolge im ersten Sektor A. Die Darstellung im rechten Teil von FIG 15 (zweite Taktperiode T) entspricht der Schaltreihenfolge im zweiten Sektor B. Die resultierenden Schaltzustände sind in der Darstellung in FIG 15 jeweils wieder im unteren Bereich gezeigt. Die entsprechend des Sektors A, B geänderte Schaltreihenfolge ist auch in dieser Darstellung veranschaulicht. Hinsichtlich der Schaltzeiten t0, t1, t2 gilt das für die erste gezeigte Taktperiode von [0..T] Gesagte für die zweite Taktperiode von [T..2T] entsprechend.

Insgesamt zeichnet sich das hier vorgestellte Verfahren dadurch aus, dass die Berechnung der Schaltzeiten t0, t1, t2 durch den Algorithmus 14 mittels möglichst einfacher Berechnungen erfolgt. Dies basiert zunächst auf der Normierung des Phasenwinkels $\varphi$ in Form der "Drehung" in den ersten Block B1, so dass unabhängig von der tatsächlichen Phasenlage $\varphi$ des Spannungszeigers z stets die geometrischen Verhältnisse im ersten Block B1 zugrunde gelegt werden können. Dieser erste Block B1 wird sodann in symmetrische Hälften aufgeteilt, wobei für die positive Hälfte der normierte Phasenwinkel $\Theta$ und für die negative Hälfte dessen Betrag $|\Theta|$ verwendet werden kann. Für negative oder positive normierte Phasenwinkel $\Theta$ kann also auf dieselbe Art und Weise ermittelt werden, in welchen von drei Flächenabschnitten F1, F2, F3 der gedrehte Spannungszeiger z fällt. In Abhängigkeit von dem jeweiligen Flächenabschnitt F1, F2, F3 werden schließlich die Schaltzeiten t0, t1, t2 bestimmt, wobei anhand der oben im Zusammenhang mit der Erläuterung der Darstellungen in FIG 12 und FIG 13 eingeführten Beziehungen ähnliche oder wiederkehrende trigonometrische Terme, z.B. cos(30°), auffallen, so dass die Berechnung auf vergleichsweise einfache Sinus- und Kosinus-Funktionen zurückgeführt ist, und die Ergebnisse einzelner Terme nur einmal berechnet werden müssen, aber mehrfach verwendet werden können. Dadurch wird die Ausführungsdauer des zyklisch mit einer bestimmten Taktzeit, z.B. 4 kHz, ausgeführten Algorithmus 14 kürzer, so dass höhere Taktzeiten möglich sind.

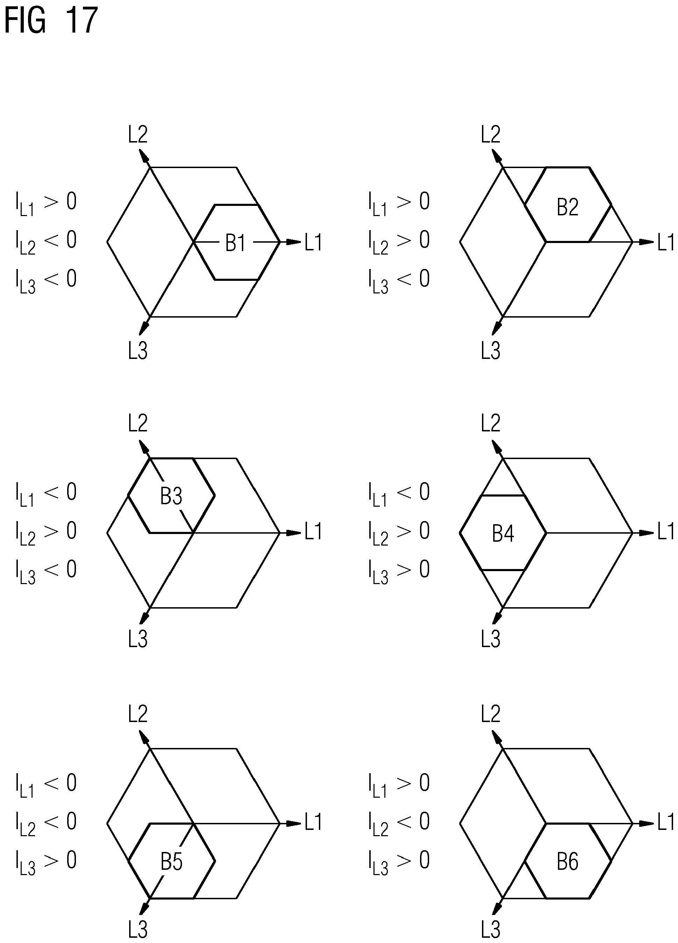

Bisher ist davon ausgegangen worden, dass die Auswahl eines der sechs Blöcke B1-B6 (FIG 6) der Schaltrose entsprechend dem von der Regelungseinrichtung 12 jeweils ausgegebenen Spannungsvektor z erfolgt. Bei einer besonderen Ausführungsform des Verfahrens erfolgt die Auswahl eines der sechs Blöcke B1-B6 nicht aufgrund des Spannungsvektors z, sondern aufgrund des speisenden Stroms, wie dies in der Darstellung in FIG 17 gezeigt ist. Dabei werden die einzelnen Phasenströme $I_{L1}$, $I_{L2}$, $I_{L3}$ betrachtet und bei z.B. $I_{L1} > 0$, $I_{L2} < 0$ und $I_{L3} < 0$ erfolgt mittels eines insoweit modifizierten Algorithmus 14 eine Auswahl des ersten Blocks B1. Entsprechend dem anhand der Phasenströme $I_{L1}$, $I_{L2}$, $I_{L3}$ jeweils ausgewählten Block B1-B6 ergibt sich der oben beschriebene Offsetwinkel und der normierte Phasenwinkel $\Theta$.

Damit wird dem Problem Rechnung getragen, dass der Vienna-Gleichrichter 10 nicht in jedem Pfad einen beeinflussbaren Schalter, sondern in der oberen und unteren Brücke nur Dioden D1-D3; D4-D6 hat, so dass nicht alle Spannungszeiger z aktiv eingeprägt werden können. Die Regelungseinrichtung 12 könnte einen Spannungszeiger z vorgeben, der nicht aktiv eingeprägt werden kann, so dass real ein anderer Zeiger eingeprägt wird. Dies kann dazu führen, dass die Regelung der Ausgangsspannung U instabil wird.

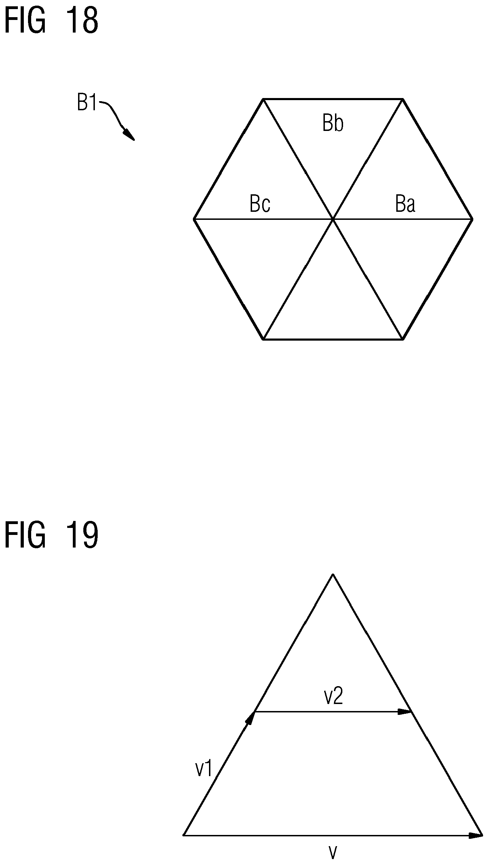

Indem der jeweils aktuelle Stromzeiger in die Auswahl eines der sechs Blöcke B1-B6 eingeht, müssen weitere Maßnahmen implementiert werden, die den von der Regelungseinrichtung 12 ausgegebenen Spannungszeiger z - den entsprechend der Regelung jeweils gewünschten Spannungszeiger z - in den jeweils ausgewählten Block B1-B6 zwingen. Des Weiteren müssen auch die "richtigen" Schaltzustände gewählt werden, da Schaltzustände außerhalb eines Blocksektors Ba, Bb, Bc (FIG 18) nicht möglich sind und ebenso nicht jeder Schaltzustand innerhalb eines Blocksektors Ba, Bb, Bc möglich ist.

In der Darstellung in FIG 18 ist gezeigt, dass dafür der erste Block B1, auf den durch eine Drehung wie oben beschrieben jeder anhand des Stromzeigers ausgewählte Block B1-B6 gedreht wird, in zweimal drei Blocksektoren Ba, Bb, Bc aufgeteilt wird, wobei aufgrund der Achsensymmetrie des Blocks B1 eine Betrachtung z.B. der drei "oberen" Blocksektoren Ba, Bb, Bc ausreicht.

Eine Auswahl des jeweiligen Blocksektors Ba, Bb, Bc erfolgt z.B. wie dies weiter oben anhand der Auswahl eines der in FIG 8 gezeigten drei Flächenabschnitte F1, F2, F3 erläutert wurde. Die Abfragen sind allerdings so gestaltet, dass auch Spannungszeiger z außerhalb eines der drei Blocksektoren Ba, Bb, Bc entsprechend dem jeweiligen Stromzeiger genau einem der drei Blocksektoren Ba, Bb, Bc zugeordnet werden. Im Falle eines Spannungszeigers z außerhalb eines der drei Blocksektoren Ba, Bb, Bc ist eine Einschränkung des Aussteuergrads erforderlich, so dass sich ein sinnvolles Pulsmuster ergeben kann.

Dazu sei zunächst vorausgeschickt, dass es sich bei den drei Blocksektoren Ba, Bb, Bc um gleichseitige Dreiecke, also sogenannte 60°-Dreiecke handelt. In einem 60°-Dreieck gilt, wie dies zur Veranschaulichung in FIG 19 gezeigt ist, für jeden entlang einer Kante verlaufenden ersten Vektor v1 und einen zugehörigen Vektor v2, dass die Summe der Längen dieser beiden Vektoren der Kantenlänge |v| des Dreiecks entspricht: |v1| + |v2| = |v|. Dies wird für eine rechnerisch besonders einfache und damit effizient in einem entsprechend modifizierten Algorithmus 14 implementierbare Verkürzung des von der Regelungseinrichtung 12 ausgegebenen Spannungsvektors z ausgenutzt. Im Ergebnis resultiert damit eine Verkürzung eines zunächst außerhalb eines der drei Blocksektoren Ba, Bb, Bc liegenden Spannungszeigers auf eine Grenzlinie des jeweiligen Blocksektors Ba, Bb, Bc.

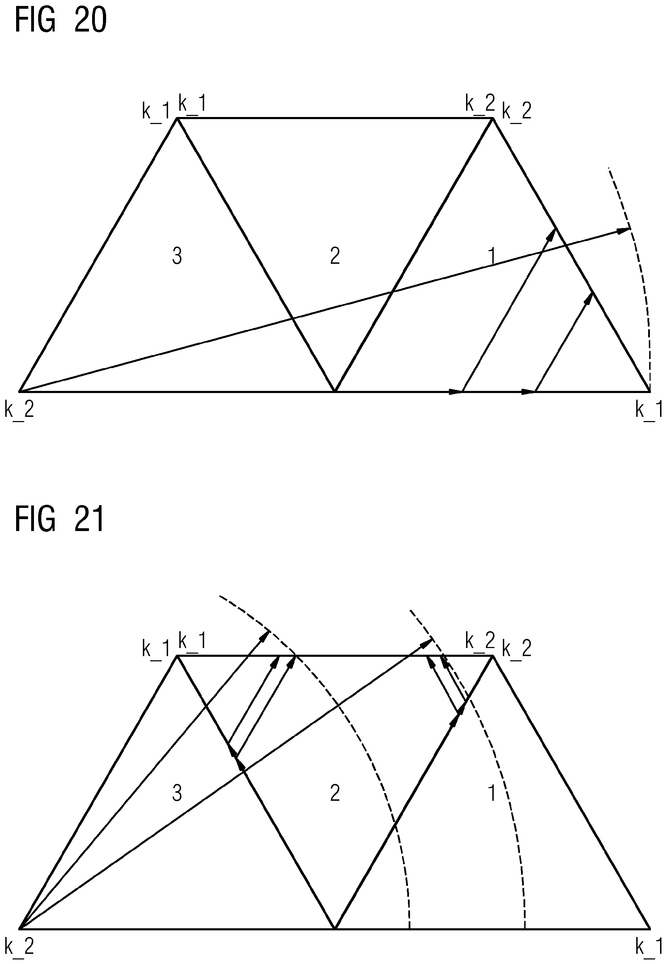

In FIG 20 ist für einen außerhalb des äußeren Blocksektors Ba liegenden Spannungszeiger z dessen Begrenzung auf den äußeren Blocksektor Ba dargestellt. Dies erfolgt im Rahmen einer Verkürzung eines der beiden Subvektoren k1, k2 und zwar derart, dass die Summe der Aussteuergrade dem Wert "1" entspricht. Entsprechend der anhand der Darstellung in FIG 19 erläuterten Verhältnisse in einem 60°-Dreieck kann bei k1 > k2 der Subvektor k1 mit dem größeren Aussteuergrad auf k1 = 1 - k2 oder der Subvektor k2 mit dem kleineren Aussteuergrad auf k2 = 1 - k1 verkürzt werden. Eine solche Verkürzung jeweils eines Subvektors k1, k2 hat gegenüber einer grundsätzlich ebenfalls möglichen prozentualen Kürzung beider Subvektoren k1, k2 den Vorteil eines erheblich geringeren Rechenaufwands bei der Ausführung eines entsprechend modifizierten Algorithmus 14.

Zur optimierten Auswahl der Kürzung entweder des Subvektors mit dem größeren Aussteuergrad oder des Subvektors mit dem kleineren Aussteuergrad kommt bei einer besonderen Ausführungsform des Verfahrens eine Fallunterscheidung auf Basis des jeweiligen Blocksektors Ba, Bb, Bc in Betracht. Da sich die Regelung des Vienna-Gleichrichters 10 schwerpunktmäßig in dem äußeren Blocksektor Ba und dem mittleren Blocksektor Bb abspielt, sollte in diesem Bereich der Fehler am kleinsten sein. Für den äußeren Blocksektor Ba erfolgt demgemäß bevorzugt eine Kürzung des längeren Subvektors. Im mittleren Blocksektor Bb erfolgt eine weitere Kürzung des kürzeren Subvektors.

Bei Kürzungen der Subvektoren sollte der Regelungseinrichtung 12 eine Mitteilung gegeben werden, so dass die Integralanteile der Regler begrenzt werden können. Dies vermeidet eine Übersteuerung nach einem Sektorwechsel.

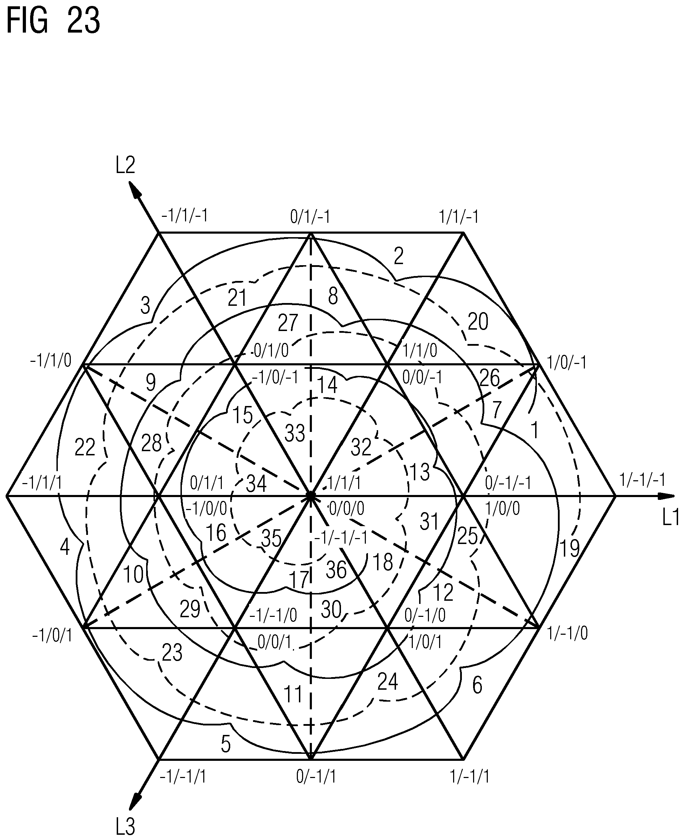

Für eine innerhalb eines modifizierten Algorithmus 14 besonders einfache Möglichkeit zur Auswahl der Umlaufrichtung (vgl. FIG 16) ist eine Nummerierung der Sektoren der Schaltrose vorgesehen, wie dies in der Darstellung in FIG 23 gezeigt ist. Die zur Veranschaulichung gezeigte Verbindung der Sektoren entsprechend der vorgegebenen Nummerierung lässt zwei Spiralen erkennen. Die in FIG 23 gezeigte vorgegebene Nummerierungsreihenfolge wird entsprechend auch als doppelspiralige Nummerierungsreihenfolge bezeichnet.

Die Ermittlung der Umlaufrichtung erfolgt anhand des Stromzeigers durch die Auswahl eines der entsprechend der doppelspiraligen Nummerierungsreihenfolge von 1 bis 36 nummerierten Sektoren, wobei sich die erhöhte Anzahl von Sektoren (36 Sektoren im Vergleich zu 24 Sektoren gemäß der Schaltrose in FIG 3, FIG 5) aufgrund der symmetrischen Teilung der Sektoren bei 30°, 90°, 150°, 210° usw. ergibt.

Zunächst wird als Ausgangspunkt ein anfänglicher Zahlenwert s anhand des Stromzeigers und der Phasenströme $I_{L1}$, $I_{L2}$, $I_{L3}$ bestimmt:

$$
\begin{array}{llllll}
I_{L1} \geq 0 & \Rightarrow & I_{L2} \geq 0 & \Rightarrow & & s=1 \ (\text{Sektor } 2) \\
 & & I_{L2} < 0 & \Rightarrow & I_{L3} \geq 0 \Rightarrow & s=5 \ (\text{Sektor } 6) \\
 & & & & I_{L3} < 0 \Rightarrow & s=0 \ (\text{Sektor } 1) \\
I_{L1} < 0 & \Rightarrow & I_{L2} \geq 0 & \Rightarrow & I_{L3} \geq 0 & s=3 \ (\text{Sektor } 4) \\
 & & & & I_{L3} < 0 \Rightarrow & s=2 \ (\text{Sektor } 3) \\
 & & I_{L2} < 0 & \Rightarrow & & s=4 \ (\text{Sektor } 5)
\end{array}
$$

Mit dem so ermittelten Wert s erfolgt eine Fallunterscheidung, ob der nach der Drehung normierte Phasenwinkel Θ größer oder kleiner 0° ist. Für Θ < 0° wird zu dem zunächst ermittelten Wert s der Wert "18" addiert (s=s+18). Für Θ ≥ 0° bleibt es bei dem Wert s. Anhand des Blocksektors Ba, Bb, Bc, in den der von der Regelungseinrichtung 12 ausgegebene Spannungszeiger z fällt, erfolgt zu dem bisher gewonnenen Zahlenwert s eine Addition einer von dem jeweiligen Blocksektor Ba, Bb, Bc abhängigen Konstante. Dabei wird bei einem in den äußeren Blocksektor Ba fallenden Spannungszeiger z der Wert "1" addiert (s=s+1), bei einem in den mittleren Blocksektor Bb fallenden Spannungszeiger z der Wert "7" (s=s+7) und bei einem in den inneren Blocksektor Bc fallenden Spannungszeiger z der Wert "13" (s=s+13). Aufgrund des resultierenden Zahlenwerts s ergibt sich entsprechend der Nummerierung der Sektoren in der Schaltrose genau ein Sektor und für die Schaltreihenfolge wird die für diesen Sektor definierte Umlaufrichtung (siehe FIG 16) verwendet. Die beschriebene Ermittlung des Zahlenwerts s ist Teil des modifizierten Algorithmus 14. Die für die einzelnen Sektoren definierte Schaltreihenfolge ist ebenfalls Teil des modifizierten Algorithmus 14 und eine mögliche Implementation besteht darin, dass mit dem ermittelten Zahlenwert s ein Sprung zu einer Position innerhalb des modifizierten Algorithmus 14 ausgelöst wird und dass dort die zu aktivierenden oder zu deaktivierenden Schalter S1-S3 und die Schaltzeiten t0, t1, t2 konkret spezifiziert sind, wie dies nachfolgend in einem Pseudocode angegeben ist:

```
CASE s OF
1: (* Schaltzustand für Sektor 1 *)
    ...
        (* Schaltzeiten für Sektor 1 *)
    ...
...
13: (* Schaltzustand für Sektor 13 *)
    ...
        (* Schaltzeiten für Sektor 13 *)
    ...
...
36: (* Schaltzustand für Sektor 36 *)
    ...
        (* Schaltzeiten für Sektor 36 *)
    ...
END
```

Eine weitere besondere und grundsätzlich optionale Ausführungsform des Verfahrens sieht eine ergänzende Symmetrierung der Zwischenkreisspannung vor. Dazu werden die Einzelspannungen über den beiden Zwischenkreiskapazitäten C1, C2 erfasst und einem Regler, insbesondere einem PI-Regler, z.B. einem von der Regelungseinrichtung 12 umfassten Regler, zugeführt. Dieser Regler greift mit seinem Ausgang auf die jeweils ermittelten Schaltzeiten t0, t1, t2 durch und ändert die Verhältnisse der aufgrund der beiden Nullzeiger $k_{01}$, $k_{02}$ resultierenden Schaltzeiten $t_{01}$, $t_{02}$. Dies basiert darauf, dass beim Betrieb des Vienna-Gleichrichters 10 über einen längeren Zeitraum, also zumindest über mehrere Taktperioden T, für den wie oben beschrieben halbierten Nullzeiger $k_{01}$, $k_{02}$ gilt, dass bei $k_{02} > k_{01}$ die Spannung über der ersten Zwischenkreiskapazität C1 steigt und entsprechend die Spannung über der zweiten Zwischenkreiskapazität C2 sinkt, während bei $k_{02} < k_{01}$ die Spannung über der ersten Zwischenkreiskapazität C1 sinkt und die Spannung über der zweiten Zwischenkreiskapazität C2 steigt. Mittels des Reglers (Symmetrierungsregler) wird das Verhältnis der beiden Nullzeiger $k_{01}$, $k_{02}$ so variiert, dass die Einzelspannungen über den beiden Zwischenkreiskapazitäten C1, C2 einander entsprechen oder zumindest im Wesentlichen entsprechen. Innerhalb jeder Taktperiode T wäre dann der Sternpunkt S im Mittel stromfrei.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

**Patentansprüche**

1.  Verfahren zur Ansteuerung eines drei steuerbare Schalter (S1-S3) umfassenden Vienna-Gleichrichters (10) mit folgenden Schritten:

    - anhand eines charakteristischen Vektors - Vektor - wird in einer Schaltrose für den Vienna-Gleichrichter (10) aus einer Mehrzahl von Blöcken (B1-B6) ein Block (B1-B6) ausgewählt,
    - entsprechend dem ausgewählten Block (B1-B6) und dessen Position in der Schaltrose wird der Vektor um einen der Position des Blocks (B1-B6) in der Schaltrose entsprechenden Offsetwinkel gedreht, wobei der resultierende Winkel des gedrehten Vektors als normierter Phasenwinkel ($\Theta$) weiter verwendet wird und der Block (B1), in den der gedrehte Vektor fällt, als erster Block (B1) bezeichnet wird,
    - anhand des normierten Phasenwinkels ($\Theta$) wird eine obere oder untere Hälfte des ersten Blocks (B1) ausgewählt,
    - anhand des Betrags des normierten Phasenwinkels ($\Theta$) und des gedrehten Vektors wird in dem ersten Block (B1) einer von drei Flächenabschnitten (F1-F3) des Blocks (B1) ausgewählt,
    - anhand des ermittelten Flächenabschnitts (F1-F3) erfolgt eine Ermittlung von in Summe dem gedrehten Vektor entsprechenden Subvektoren (k0,k1,k2),

- anhand der ermittelten Subvektoren (k0,k1,k2) erfolgt eine Ermittlung von Schaltzeiten (t0,t1,t2) zur Ansteuerung der Schalter (S1-S3).

2. Verfahren nach Anspruch 1, wobei für jeden Sektor der Schaltrose eine Umlaufrichtung definiert ist und zur Auswahl einer Umlaufrichtung für die Ansteuerung der Schalter (S1-S3) in demjenigen Block (B1-B6), in den der charakteristische Vektor fällt, entsprechend der im ersten Block (B1) ausgewählten oberen oder unteren Hälfte dessen obere oder untere Hälfte und entsprechend dem im ersten Block (B1) ausgewählten Flächenabschnitt (F1-F3) einer von drei Sektoren entsprechend der zugrunde liegenden Schaltrose ausgewählt wird.

3. Verfahren nach Anspruch 1 oder 2, wobei die Schaltzeit (t0) eines Nullvektors (k0) halbiert und eine Ansteuerung eines der Schalter (S1-S3) entsprechend der halbierten Schaltzeit (t0) am Anfang und am Ende einer jeden Taktperiode (T) erfolgt.

4. Verfahren nach Anspruch 1, 2 oder 3, wobei die ermittelten Schaltzeiten (t0,t1,t2) halbiert und die halbierten Schaltzeiten (t0,t1,t2) in einer ersten Reihenfolge auf eine erste Hälfte einer jeden Taktperiode (T) und in einer im Vergleich zur ersten Reihenfolge umgekehrten zweiten Reihenfolge auf eine zweite Hälfte der jeweiligen Taktperiode (T) verteilt werden.

5. Verfahren nach einem der Ansprüche 1 bis 4, wobei als charakteristischer Vektor ein von einer Regelungseinrichtung (12) ausgegebener Spannungsvektor (z) verwendet wird.

6. Verfahren nach einem der Ansprüche 1 bis 4, wobei als charakteristischer Vektor ein Stromvektor gemäß einem den Vienna-Gleichrichter (10) speisenden Netz verwendet wird.

7. Verfahren nach Anspruch 6, wobei die ermittelten Subvektoren (k0,k1,k2) in Abhängigkeit von einem äußeren, mittleren oder inneren Blocksektor (Ba,Bb,Bc), in den der gedrehte Vektor fällt, auf die Fläche des jeweiligen Blocksektors (Ba,Bb, Bc) begrenzt werden.

8. Verfahren nach Anspruch 7, wobei für jeden Sektor der Schaltrose zumindest eine Umlaufrichtung definiert ist, wobei zur Auswahl einer Umlaufrichtung für die Ansteuerung der Schalter (S1-S3) die Sektoren der Schaltrose entsprechend einer vorgegebenen Nummerierungsreihenfolge nummeriert sind und wobei einer der Sektoren und die dort definierte Umlaufrichtung gemäß einem für den Block (B1-B6), in den der charakteristische Vektor fällt, vorgegebenen Zahlenwert, zu dem in Abhängigkeit vom Vorzeichen des normierten Phasenwinkels ($\Theta$) ein vorgegebener erster oder ein zweiter Summand und in Abhängigkeit vom jeweiligen Blocksektor (Ba,Bb,Bc) ein vorgegebener dritter, vierter oder fünfter Summand addiert wird, ausgewählt werden.

9. Verfahren nach einem der Ansprüche 1 bis 8, wobei zur Symmetrierung einer ausgangsseitigen, über zwei in Reihe geschalteten Zwischenkreiskapazitäten (C1,C2) abgreifbaren Zwischenkreisspannung des Vienna-Gleichrichters (10) eine Spannung über jeder Zwischenkreiskapazität (C1,C2) ermittelt wird, wobei die ermittelten Spannungswerte einem Regler zugeführt werden und wobei der Regler zur Symmetrierung der Zwischenkreisspannung die Schaltzeiten (t0,t1,t2), insbesondere die Schaltzeit (t0) eines Nullzeigers, beeinflusst.

10. Computerprogramm mit Programmcodemitteln, um alle Schritte von jedem beliebigen der Ansprüche 1 bis 9 durchzuführen, wenn das Computerprogramm zur Ansteuerung eines Vienna-Gleichrichters (10) ausgeführt wird.

**Claims**

1. Method for controlling a Vienna rectifier (10) having three controllable switches (S1-S3), comprising the following steps:

- on the basis of a characteristic vector - vector - a block (B1-B6) is selected from a plurality of blocks (B1-B6) in a space vector switching diagram for the Vienna rectifier (10),
- depending on the block (B1-B6) selected and its position in the space vector switching diagram, the vector is rotated through an offset angle according to the position of the block (B1-B6) in the space vector switching diagram, wherein the resulting angle of the rotated vector continues to be used as the normalised phase angle ($\Theta$) and the block (B1) in which the rotated vector falls is designated the first block (B1),
- on the basis of the normalised phase angle ($\Theta$), an upper or lower half of the first block (B1) is selected,

- on the basis of the absolute value of the normalised phase angle (Θ) and the vector, one of three area sections (F1-F3) of the block (B1) is selected in the first block (B1),
- on the basis of the area section (F1-F3) determined, subvectors (k0,k1,k2) corresponding in total to the rotated vector are determined,
- on the basis of the subvectors (k0,k1,k2) determined, switching times (t0,t1,t2) for triggering the switches (S1-S3) are determined.

2. Method according to claim 1, wherein for each sector of the space vector switching diagram a direction of rotation is defined and, to select a direction of rotation for the triggering of the switches (S1-S3) in the block (B1-B6) in which the characteristic vector falls, depending on the upper or lower half selected in the first block (B1), the upper or lower half thereof is selected and, depending on the area section (F1-F3) selected in the first block (B1), one of three sectors is selected according to the underlying space vector switching diagram.

3. Method according to claim 1 or 2, wherein the switching time (t0) of a zero vector (k0) is halved and one of the switches (S1-S3) is triggered at the start and end of each elementary period (T) according to the halved switching time (t0).

4. Method according to claim 1, 2 or 3, wherein the switching times (t0,t1,t2) determined are halved and the halved switching times (t0,t1,t2) are distributed in a first sequence over a first half of each elementary period (T) and, in a second sequence that is the reverse of the first sequence, over a second half of the respective elementary period (T).

5. Method according to one of claims 1 to 4, wherein a voltage vector (z) output by a control system (12) is used as the characteristic vector.

6. Method according to one of claims 1 to 4, wherein a current vector according to the power system supplying the Vienna rectifier (10) is used as the characteristic vector.

7. Method according to claim 6, wherein, depending on whether the rotated vector falls in an outer, middle or inner block sector (Ba,Bb,Bc), the subvectors (k0,k1,k2) determined are limited to the area of the respective block sector (Ba,Bb,Bc).

8. Method according to claim 7, wherein at least one direction of rotation is defined for each sector of the space vector switching diagram, wherein, to select a direction of rotation for triggering the switches (S1-S3), the sectors of the space vector switching diagram are numbered according to a predefined numbering sequence, and wherein one of the sectors and the direction of rotation defined there are selected according to a numerical value predefined for the block (B1-B6) in which the characteristic vector falls, to which is added a predefined first or second summand depending on the sign of the normalised phase angle (Θ), and a third, fourth or fifth summand depending on the respective block sector (Ba, Bb, Bc).

9. Method according to one of claims 1 to 8, wherein, for balancing a DC-link voltage of the Vienna rectifier (10) that can be tapped off on the output side via two series-connected DC-link capacitors (C1,C2), a voltage dropped across each DC-link capacitor (C1,C2) is determined, wherein the voltage values determined are fed to a controller, and wherein the controller influences the switching times (t0,t1,t2), in particular the switching time (t0) of a zero vector, to balance the DC-link voltage.

10. Computer program having program code means for carrying out all the steps of any of claims 1 to 9 when the computer program for controlling a Vienna rectifier (10) is executed.

**Revendications**

1. Procédé de commande d'un redresseur (10) Vienne, comprenant trois interrupteurs (S1 à S3) pouvant être commandés, ayant les stades suivants :

- à l'aide d'un vecteur - vecteur caractéristique - on sélectionne, dans une rosace de commutation pour le redresseur (10) Vienne, un bloc (B1 à B6) parmi une pluralité de blocs (B1 à B6),
- conformément au bloc (B1 à B6) sélectionnés et à sa position dans la rosace de commutation, on fait tourner le vecteur d'un angle de décalage correspondant à la position du bloc (B1 à B6) dans la rosace de commutation, l'angle résultant du vecteur ayant tourné continuant à être utilisé comme angle (Θ) de phase normé et le bloc (B1), dans lequel tombe le vecteur qui a tourné, étant désigné comme premier bloc (B1),
- à l'aide de l'angle (Θ) de phase normé, on sélectionne une moitié supérieure ou une moitié inférieure du premier bloc (B1),
- à l'aide de la valeur absolue de l'angle (Θ) de phase normé et du vecteur qui a tourné, on sélectionne, dans le premier bloc (B1), l'une de trois parties (F1 à F3) de surface du bloc (B1),
- à l'aide de la partie (F1 à F3) de surface déterminée, s'effectue une détermination de sous-vecteurs (k0, k1, k2) correspondant en somme au vecteur qui a tourné,
- à l'aide des sous-vecteurs (k0, k1, k2) déterminés, s'effectue une détermination de temps (t0, t1, t2) de commutation pour commander les interrupteurs (S1 à S3).

2. Procédé suivant la revendication 1, dans lequel, pour chaque secteur de la rosace de commutation, un sens de rotation est défini et, pour sélectionner un sens de rotation pour la commande des interrupteurs (S1 à S3) dans le bloc (B1 à B6), dans lequel tombe le vecteur caractéristique, on choisit, conformément à la moitié supérieure ou inférieure sélectionnée dans le premier bloc (B1), sa moitié supérieure ou inférieure et, conformément à la partie (F1 à F3) de surface sélectionnée dans le premier bloc (B1), l'un de trois secteurs, conformément à la rosace de commutation de base.

3. Procédé suivant la revendication 1 ou 2, dans lequel le temps (t0) de commutation d'un vecteur (k0 nul est divisé par deux et une commande de l'un des interrupteurs (S1 à S3) s'effectue au début et à la fin de chaque période (T) d'horloge, conformément au temps (t0) de commutation divisé par deux.

4. Procédé suivant la revendication 1, 2 ou 3, dans lequel les temps (t0, t1, t2) de commutation déterminés sont divisés par deux et les temps (t0, t1, t2) de commutation divisés par deux sont répartis en une première succession, sur une première moitié de chaque période (T) d'horloge, et en une deuxième succession, inversée par rapport à la première succession, sur une deuxième moitié de la période (T) d'horloge respective.

5. Procédé suivant l'une des revendications 1 à 4, dans lequel on utilise, comme vecteur caractéristique, un vecteur (z) de tension émis par un dispositif (12) de régulation.

6. Procédé suivant l'une des revendications 1 à 4, dans lequel on utilise, comme vecteur caractéristique, un vecteur de courant suivant un réseau alimentant le redresseur (10) Vienne.

7. Procédé suivant la revendication 6, dans lequel on limite les sous-vecteurs (k0, k1, k2) déterminés en fonction d'un secteur (Ba, Bb, Bc) de bloc extérieur, médian ou intérieur, dans lequel tombe le vecteur qui a tourné, à la surface du secteur (Ba, Bb, Bc) de bloc respectif.

8. Procédé suivant la revendication 7, dans lequel, pour chaque secteur de la rosace de commutation, est défini au moins un sens de rotation, dans lequel, pour sélectionner un sens de rotation pour la commande des interrupteur (S1 à S3), on numérise les secteurs de la rosace de commutation, conformément à une succession de numérotation donnée à l'avance et dans lequel on sélectionne l'un des secteurs, et le sens de rotation qui y est défini, suivant une valeur numérique donnée à l'avance au bloc (B1 à B6), dans lequel le vecteur caractéristique tombe, valeur numérique à laquelle est ajouté, en fonction du signe de l'angle (Θ) de phase normé, un premier ou un deuxième terme de somme donné à l'avance et, en fonction du secteur (Ba, Bb, Bc) de bloc respectif, un troisième, quatrième ou cinquième terme de somme donné à l'avance.

9. Procédé suivant l'une des revendications 1 à 8, dans lequel, pour rendre symétrique une tension de circuit intermédiaire, du côté de la sortie, et pouvant être prélevée aux bornes de deux capacités (C1, C2) de circuit intermédiaire montées en série, du redresseur (10) Vienne, on détermine une tension aux bornes de chaque capacité (C1, C2) de circuit intermédiaire, on envoie les valeurs de tension déterminées à un régleur et dans lequel le régleur, pour rendre symétrique la tension de circuit intermédiaire, influe sur les temps (t0, t1, t2) de commutation, notamment sur le temps (t0) de commutation d'un vecteur nul.

10. Programme d'ordinateur, ayant des moyens de code de programme, pour effectuer tous les stades de chacune quelconque des revendications 1 à 9, lorsque le programme d'ordinateur est exécuté pour commander un redresseur (10) Vienne.

# FIG 1

FIG 2

FIG 3

FIG 4

FIG 5

FIG 6

FIG 7

FIG 8

FIG 9

FIG 10

FIG 11

FIG 12

FIG 13

# FIG 14

a, b, C, $k_1$, $k_2$, $k_0$,
S0_1, S0_2

EP 3 068 024 B1

# FIG 15

0       T      2T

$L_1$

0

$L_2$

0

$L_3$

0

k0 1/2     k0 1/2

k 1/2    k 1/2

k 2/2   k 2/2

k0 2/2  k0 2/2

100       110

000  000    010  010

010  010    011  011

011       001

FIG 16

# FIG 17

$I_{L1} > 0$
$I_{L2} < 0$
$I_{L3} < 0$

B1

$I_{L1} > 0$
$I_{L2} > 0$
$I_{L3} < 0$

B2

$I_{L1} < 0$
$I_{L2} > 0$
$I_{L3} < 0$

B3

$I_{L1} < 0$
$I_{L2} > 0$
$I_{L3} > 0$

B4

$I_{L1} < 0$
$I_{L2} < 0$
$I_{L3} > 0$

B5

$I_{L1} > 0$
$I_{L2} < 0$
$I_{L3} > 0$

B6

FIG  18

B1

Bb

Bc

Ba

FIG  19

v2

v1

v

## FIG 20

k_1 k_1  k_2 k_2

3  2  1

k_2  k_1

## FIG 21

k_1 k_1  k_2 k_2

3  2  1

k_2  k_1

FIG 22

# FIG 23

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0660498 A2
- EP 2131480 A